Europäisches Patentamt

European Patent Office

Office européen des brevets

(11) Veröffentlichungsnummer: **0 001 442**
**B1**

(12) **EUROPÄISCHE PATENTSCHRIFT**

(21) Anmeldenummer: 78101045.9

(22) Anmeldetag: 30.09.78

(51) Int. Cl.³: **B 29 D 27/04, B 32 B 1/06,**
**(B 63 B 5/24)**

(54) Verfahren zum Ausschäumen von Sandwich-Elementen mit Reaktionsgemischen

(30) Priorität: 01.10.77 DE 2744318

(43) Veröffentlichungstag der Anmeldung:
18.04.79 Patentblatt 79/08

(45) Bekanntmachung des Hinweises auf die Patenterteilung:
01.10.80 Patentblatt 80/20

(84) Benannte Vertragsstaaten:
BE DE FR GB NL

(56) Entgegenhaltungen:
DE - A - 2 435 003
US - A - 3 583 118

(73) Patentinhaber: BAYER AG
Zentralbereich Patente, Marken und Lizenzen
D - 5090 Leverkusen 1, Bayerwerk (DE)

(72) Erfinder: Brinkmann, Karl-Josef, Ing.-grad.
Birkenbergstrasse 77
D - 5090 Leverkusen 3 (DE)
Müller, Hans
Albert-Einstein-Strasse 63
D - 5090 Leverkusen (DE)
Mönig, Dieter, Ing.-grad.
Hirschweg 58
D - 5068 Odenthal-Voiswinkel (DE)

Verfahren zum Ausschäumen von Sandwich-Elementen mit Reaktionsgemischen

Die Erfindung richtet sich auf ein Verfahren zur Herstellung eines ausgeschäumten Körpers, wobei die Deckschichten des Sandwich-Bauteils in einer Presse gehaltert werden und das Reaktionsgemisch an einer oder mehreren Stellen eingebracht wird, sich zwischen den Deckschichten ausbreitet und dabei die Luft im Flanschbereich der beiden Deckschichten entweicht.

Im Fahrzeugbau, beispielsweise als Bootsrumpf oder als Karosserieteil, oder im Behälterbau werden Fertigteile eingesetzt, die fest äußere Deckschichten haben und im Inneren mit Hartschaum ausgefüllt sind. Solche Bauteile, die auch unter dem Namen Sandwich-Elemente bekannt sind, werden durch Ausschäumen zweier entsprechend geformter Deckschichten in einer Presse hergestellt. Die Qualität der Sandwich-Elemente hängt entscheidend von den Ausschäumbedingungen ab. Die Luft zwischen den beiden Deckschichten muß vollständig entwichen sein. Da eine Entlüftung über Bohrungen in der Deckschicht zu Schwachstellen führt, wird der Schaum so eingebracht, daß die Luft zwischen den Deckschichten an der Stelle entweichen kann, wo die beiden Ränder der Deckschichten zusammenstoßen. Dieser Bereich wird als Flansch — da in diesem Bereich häufig die Deckschichten teilweise verklebt sind auch als Klebeflansch — bezeichnet. Bei dem Ausschäumen von Sandwich-Elementen nach dem Stand der Technik tritt eine nicht optimale Schaumstruktur im Flanschbereich auf. Durch das unvermeidliche Fließen im Spalt nehmen die Schaumstoffzellen eine langgestreckte Form an. Schaum mit einer solchen Struktur kann aber nur erheblich niedrigere Schubkräfte als normaler Schaum übertragen. Gerade der Flanschbereich, der besonders beansprucht wird, ist nach bekannten Herstellungsverfahren unterdurchschnittlich ausgebildet.

Es stellt sich daher die Aufgabe, das Verbinden der Deckschichten und das Ausschäumen des Sandwich-Elementes so zu verbessern, daß Schwachstellen im Schaum, die einerseits durch nicht entwichene Luft oder durch das Fließen des Schaums im Flanschbereich entstehen, sicher vermieden werden.

Diese Aufgabe wird dadurch gelöst, daß vor dem Ausschäumen die beiden Deckschichten im Flanschbereich durch Profilleisten so miteinander verklebt werden, daß die Luft aus dem Inneren des Körpers längs der Profile möglichst ungehindert entweichen kann.

Die Profilleisten ermöglichen eine schubfeste Verbindung der beiden Deckschichten. Sie sind charakterisiert durch ausreichende Querfestigkeit und Schubfestigkeit und ausreichende Größe der Luftöffnungen im Querschnitt. Der Querschnitt ist so groß, daß sich auch die Profilleiste ausschäumen läßt, daß sich auch dort Schaum mit überwiegend kugelförmigen Zellen bilden kann. Die Breite ist auf die Erstarrungszeit und den Viskositätsanstieg des Füllschaums abgestimmt.

Bei der Herstellung des erfindungsgemäßen Sandwich-Elementes werden die beiden Deckschichten im Bereich, wo sie über die Profilleiste zusammengehalten werden, mit einem Kleber bestrichen und die Profilleiste wird eingelegt. Beim Schließen der Form entsteht eine Klebeverbindung, die die Festigkeit im Flanschbereich erhöht. Wie bisher üblich, wird das Reaktionsgemisch so eingebracht, daß es beim Aufsteigen die Luft verdrängt. Wegen der eingeklebten Profilleisten im Flanschbereich kann die Luft ungehindert vollständig entweichen. Der Reaktionsschaum dringt auch in das Profil im Flanschbereich ein, und die Schaumzellen zeigen im Bereich des Klebeflansches eine erwünschte isotrope Struktur. Im erfindungsgemäßen Flanschbereich können wesentlich größere Schubkräfte als bisher übertragen werden. Neben der besseren Schaumqualität trägt die Profilleiste zur höheren Festigkeit bei. Ein stabiler Flansch, der dicker ist, ist besonders erwünscht, weil dadurch einfache und sichere Befestigungsmöglichkeiten, beispielsweise für Stoßleisten, vorhanden sind.

Bei dem erfindungsgemäßen Verfahren tritt auch eine Vereinfachung auf, weil die Ausbildung eines gleichmäßig breiten Spaltes am Klebeflansch nicht mehr kritisch ist und die Profilleiste Unebenheiten ausgleichen kann. Die Flansche des Sandwich-Elementes brauchen weniger bearbeitet zu werden.

Als Profilleisten sind entsprechend strukturierte Bänder aus Kunststoff oder Metall geeignet. Bei einem trapezförmigen Profil ergeben sich große Klebeflächen, und nicht ausgeschäumt ist dieser Flansch schon sehr stabil. Kunststoff-Doppelstegplatten oder die besonders im Flugzeugbau eingesetzten Bienenwabenstrukturen sind gut geeignet. Bei der Verwendung einer Profilleiste mit quer zur Bandrichtung nebeneinanderliegenden, üblicherweise zylindrischen Röhrchen kann die Klebeschicht dicker sein. Es ergibt sich ein Flansch von hoher Festigkeit. In der Praxis hat sich auch mit Polyesterharz getränkte Wellpappe als profiliertes Band, das zwischen die Deckschichten am Klebeflansch gelegt wird, vorzüglich bewährt.

Das erfindungsgemäße Verfahren ist anhand der Figuren im folgenden beispielhaft näher erläutert.
Es zeigen:
Figur 1 Schnitt durch die Form im Bereich des Klebeflansches.
Figur 2 bis 4 Verschiedene Profilleisten, die im Klebeflansch eingebaut werden können.

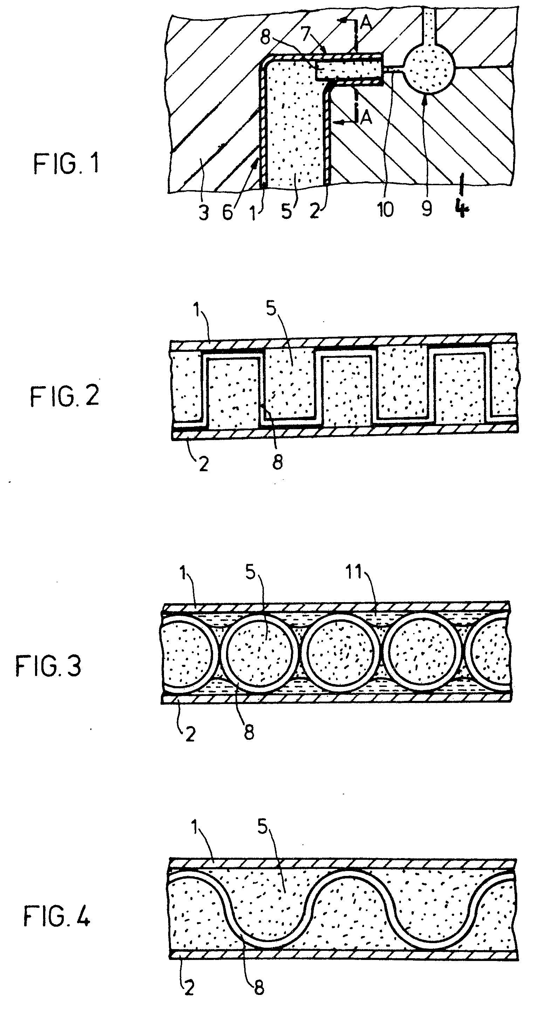

Figur 1 zeigt einen Ausschnitt des Randbereichs eines in einer Presse eingelegten Sandwich-Elementes. In diesem Fall ist das Bauteil ein Container der Größe 2 × 3 × 1m. Die beiden Deckschichten 1 und 2 aus glasfaserverstärktem Polyesterharzen befinden sich im Oberteil 3 und Unterteil 4 einer Presse. Das Reaktionsgemisch 5, üblicherweise ein 2-Komponentenschaum auf der Basis Polyurethan, wird im Boden des Containers eingebracht. Beim Ausschäumen breitet es sich gleichmäßig aus, es steigt in den Seitenteilen 6 hoch und dringt auch in den Flanschbereich 7 ein. Die beiden einander zugewandten Seiten des Flansches 7 sind vor dem Einlegen der beiden Deckschichten 1,2 in die Presse mit einem Polyesterkleber bestrichen und die Profilleiste 8 ist eingelegt worden. Durch das Zusammenpressen in der Form entsteht eine feste Klebeverbindung. Die Breite der Profilleiste 8 liegt hier bei 60mm. Der Flansch 7 steht etwa 40mm vom Seitenteil 6 ab. Wegen der profilleiste 8 ergibt sich eine Flanschdicke von etwa 15mm. In der Figur ist auch das beim Ausschäumen übliche Entlüftungssystem 9 angedeutet. Der 20mm lange Spalt 10 hat eine Dicke von 0,4mm.

Bei dem großen Querschnitt der Profilleiste kann die im Sandwichteil vorhandene Luft ungehindert entweichen. Im Flansch 7 kommt es nicht zu einem kritischen Kriechen des Schaumes wie in den Spalten, so daß auch dort eine zufriedenstellende Schaumstruktur erhalten wird.

In den Figuren 2 bis 4 sind Schnitte A—A durch den Flanschbereich 7 dargestellt. Die Profilleiste 8 ist in Figur 2 rechteckig ausgebildet. In figur 3 sind aneinandergereihte Röhrchen aus PVC als Profilleiste 8 verwendet worden. Bei dieser Profilleiste empfiehlt es sich, die Klebeschicht 11 dicker zu machen. Das Profil in Figur 4 ergibt sich bei der Verwendung Polyesterharz-getränkter Wellpappe.

**Neuer Patentanspruch**

Verfahren zur Herstellung eines ausgeschäumten Körpers, wobei die Deckschichten des Sandwich-Bauteiles in einer Presse gehaltert werden und das Reaktionsgemisch an einer oder mehreren Stellen eingebracht wird, sich zwischen den Deckschichten ausbreitet und dabei die Luft im Flanschbereich der beiden Deckschichten entweicht, dadurch gekennzeichnet, daß vor dem Ausschäumen die Deckschichten (1, 2) im Flanschbereich (7) durch Profilleisten (8) so miteinander verklebt werden, daß die Luft aus dem Inneren des Körpers längs der Profile möglichst ungehindert entweichen kann.

**Revendication**

Procédé de production d'un corps alvéolaire suivant lequel des couches extérieures du composant stratifié ou en sandwich sont retenues dans une presse et le mélange réactionnel est introduit en un ou plusieurs emplacements et s'étale entre les couches extérieures, tandis que l'air s'échappe dans la région du rebord des deux couches extérieures, caractérisé en ce que les couches extérieures (1, 2) sond reliées l'une à l'autre par encollage dans la région du rebord (7) avant formation de la mousse avec interposition de baguettes profilées (8) de manière que l'air puisse s'échapper très librement de l'intérieur du corps le long des profilés.

**Claim**

A process for the production of a foam-filled element, wherein the surface layers of the sandwich structural element are held in a press and the reaction mixture is introduced at one or more points, expands between the surface layers and the air escapes in the flange area of the two surface layers, characterised in that prior to filling with foam the surface layers (1, 2) are stuck together by profile beading (8) in the flange area (7) in such a way that the air from the interior of the element can escape with as little obstruction as possible along the profiles.

**0 001 442**

FIG. 1

FIG. 2

FIG. 3

FIG. 4